# EUROPEAN PATENT APPLICATION

(11) **EP 4 819 477 A1**
(43) Date of publication of application: **07.10.2026**
(21) Application number: 24897032.9
(22) Date of filing: 04.09.2024
(51) Int. Cl.: H02M 7/487

(54) **POWER CONVERTER**

(30) Priority: 01.12.2023 JP 2023203567
(71) Applicant: Hitachi, Ltd., Tokyo 100-8280 (JP)
(72) Inventor: GAO, Hangxian, Tokyo 100-8280 (JP)
(74) Representative: MERH-IP Matias Erny Reichl Hoffmann Patentanwälte PartG mbB
(86) International application number: PCT/JP2024/031771
(87) International publication number: WO 2025/115341

(57) **Abstract**

This power converter includes first and second capacitors, first to sixth switching elements, and a load, wherein switching between a third output state and a first output state occurs via a second dead-time state, switching between the third output state and a second output state occurs via a first dead-time state, and when transitioning back and forth between the third output state and the second dead-time state, the fifth switching element executes an operation of completing turn-on before the third switching element and/or completing turn-off after the third switching element, or, when transitioning back and forth between the third output state and the first dead-time state, the sixth switching element executes an operation of completing turn-on before the second switching element and/or completing turn-off after the second switching element.

## Description

### Technical Field

The present invention relates to a power converter including a three-level inverter.

### Background Art

In recent years, multi-level inverters have been actively studied in response to the need for higher bus voltages for power converters. For example, PTL 1 proposes a multi-level inverter circuit called ANPC (Active Neutral-Point-Clamped).

### Citation List

### Patent Literature

PTL 1: JP 2005-176538 A

### Summary of Invention

### Technical Problem

However, in the related art, there is an imbalance in surge voltage and loss between switching elements, and there is a problem of deterioration in power efficiency and reliability.

The present invention has been made in view of the above problems, and an object thereof is to provide a power converter capable of correcting an imbalance in a surge voltage and a loss between switching elements and enhancing power efficiency.

### Solution to Problem

According to the present invention, there is provided a power converter including: first and second capacitors connected in series between a positive electrode and a negative electrode of a DC power supply; first to fourth switching elements further connected in series between the positive electrode and the negative electrode of the DC power supply; a fifth switching element connected between a connection point of the first and second switching elements and a connection point of the first and second capacitors; and a sixth switching element connected between a connection point of the third and fourth switching elements and a connection point of the first and second capacitors, a connection point of the second and third switching elements being connected with a load. A state in which the first, second, and sixth switching elements are ON, and the third, fourth, and fifth switching elements are OFF is set to a first output state, a state in which the third, fourth, and fifth switching elements are ON, and the first, second, and sixth switching elements are OFF is set to a second output state, and a state in which the second, third, fifth, and sixth switching elements are ON, and the first and fourth switching elements are OFF is set to a third output state. A state in which the third and fifth switching elements are ON and the first, second, fourth, and sixth switching elements are OFF is set to a first dead time state, and a state in which the second and sixth switching elements are ON and the first, third, fourth, and fifth switching elements are OFF is set to a second dead time state. Switching between the third output state and the first output state passes through the second dead time state, and switching between the third output state and the second output state passes through the first dead time state. When transitioning between the third output state and the second dead time state, the fifth switching element performs at least one of an operation of completing turn-on before the third switching element completes the turn-on or an operation of completing turn-off after the third switching element completes the turn-off, or when transitioning between the third output state and the first dead time state, the sixth switching element performs at least one of an operation of completing the turn-on before the second switching element completes the turn-on or an operation of completing the turn-off after the second switching element completes the turn-off.

### Advantageous Effects of Invention

According to the present disclosure, it is possible to provide a power converter capable of correcting an imbalance in a surge voltage and a loss between switching elements and improving power efficiency.

Further features relating to the present invention will become apparent from the description of the present specification and the accompanying drawings. In addition, objects, configurations, and advantageous effects other than those described above will be clarified by the descriptions of the following embodiments.

### Brief Description of Drawings

[FIG. 1] FIG. 1 is a schematic diagram illustrating a power converter according to a reference example.
[FIG. 2] FIG. 2 is a circuit diagram illustrating a U-phase of FIG. 1.
[FIG. 3] FIG. 3 is a state transition diagram illustrating a control method of an ANPC inverter in the reference example.
[FIG. 4] FIG. 4 is a time chart illustrating the control method of the ANPC inverter in the reference example.
[FIG. 5] FIG. 5 is a diagram for describing a case where a switching loss and a switching surge occur in a negative cycle.
[FIG. 6] FIG. 6 is a diagram for comparing a switching surge voltage and a loss in the reference example.
[FIG. 7] FIG. 7 is a state transition diagram illustrating a control method of an ANPC inverter in a first embodiment of the present invention.
[FIG. 8] FIG. 8 is a time chart illustrating the control method of the ANPC inverter in the first embodiment of the present invention.
[FIG. 9] FIG. 9 is a diagram for describing currents flowing in a state O and a state Oec.
[FIG. 10] FIG. 10 is a diagram for comparing a switching surge voltage and a loss in the first embodiment of the present invention.
[FIG. 11] FIG. 11 is a time chart for describing a difference in switching delay time in the first embodiment.

### Description of Embodiments

First, a reference example useful for understanding the present embodiment will be described below with reference to the drawings. Hereinafter, a three-phase inverter power conversion device will be described as an example, but the present invention can also be applied to a single-phase inverter, a multi-phase inverter, and a converter.

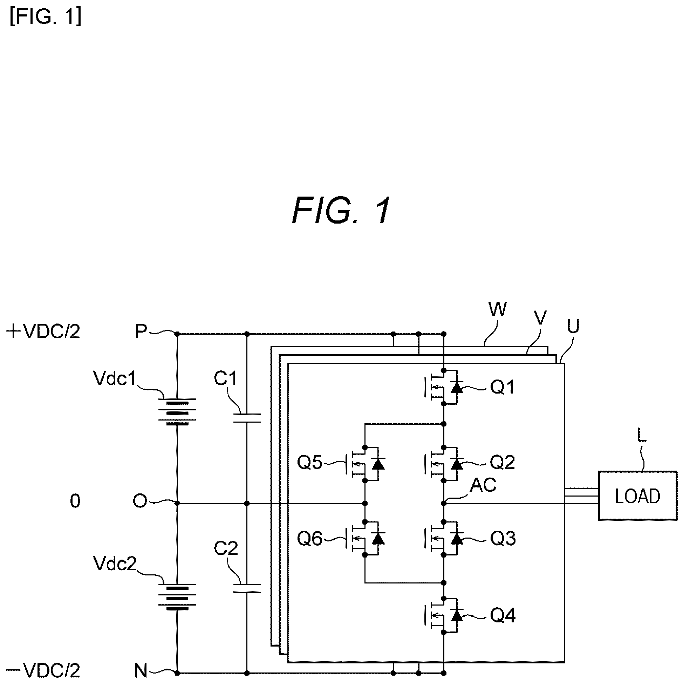

FIG. 1 is a schematic diagram illustrating a three-phase inverter power converter described in PTL 1. The device of FIG. 1 is a 3-level ANPC (Active Neutral-Point-Clamped) inverter having three phases (hereinafter simply referred to as an ANPC inverter). As illustrated in FIG. 1, in the ANPC inverter, DC power supplies Vdc1 and Vdc2 are connected in series. A high potential terminal of the DC power supply Vdc1 is a P terminal, a connection point between the DC power supplies Vdc1 and Vdc2 is an ○ terminal as a medium potential terminal, and a low potential terminal of the DC power supply Vdc2 is an N terminal. A smoothing capacitor C1 is connected between the P terminal and the ○ terminal, and a smoothing capacitor C2 is also connected between the ○ terminal and the N terminal. A plurality of capacitors C1 and a plurality of capacitors C2 may be connected in parallel. The P, O, and N terminals are further connected to main circuit portions as U, V, and W phases.

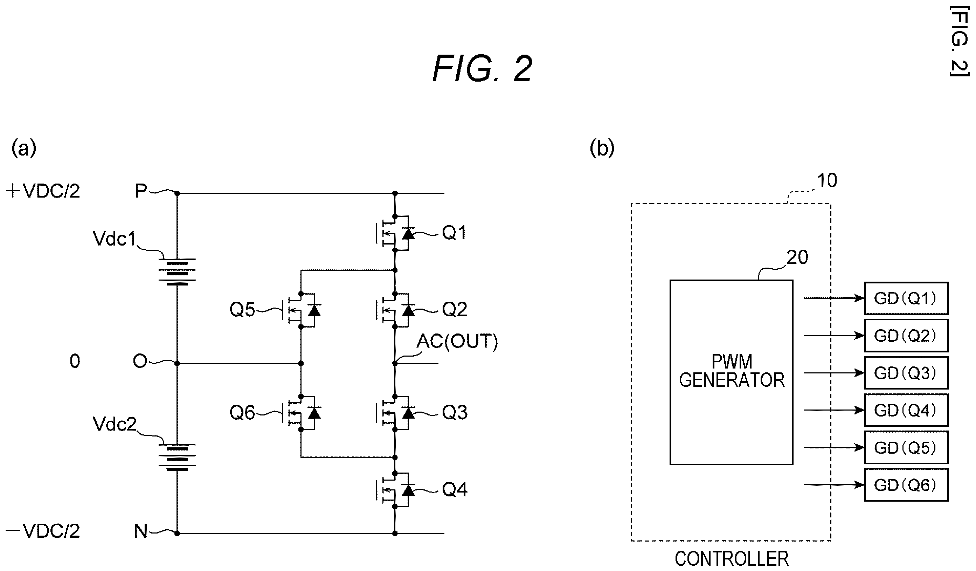

A specific configuration will be described with reference to FIG. 2 by using the U-phase as an example. As illustrated in FIG. 2(a), the U-phase includes a first switching element Q1, a second switching element Q2, a third switching element Q3, a fourth switching element Q4, a fifth switching element Q5, and a sixth switching element Q6. Each switching element is a MOSFET, but is not limited thereto, and may be a parallel connection body of a semiconductor switching element and a diode. The semiconductor switching element may be, for example, a semiconductor switching element such as an IGBT in addition to the MOSFET. The diode may be, for example, a diode such as a PN junction diode or a Schottky barrier diode. The material of the switching element described above may be a material such as Si, SiC, GaN, or GaO. In addition, two or more types of the above switching elements may be hybrid mounted. In FIG. 2(a), the capacitor is not illustrated. Note that, hereinafter, the "switching elements Q1 to Q6" may be simply referred to as "Q1 to Q6" in order to avoid redundant expression.

The first switching element Q1, the second switching element Q2, the third switching element Q3, and the fourth switching element Q4 are connected in series between the terminal P and the terminal N in this order. The fifth switching element Q5 is connected between the ○ terminal and an intermediate connection point between the first switching element Q1 and the second switching element Q2. The sixth switching element Q6 is connected between the O terminal and an intermediate connection point between the third switching element Q3 and the fourth switching element Q4. In addition, an intermediate connection point between the second switching element Q2 and the third switching element Q3 is referred to as an AC terminal, and the AC terminal is connected to a load (see FIG. 1).

As illustrated in FIG. 2(b), switching of the switching elements Q1 to Q6 is controlled by individual gate drivers (GD). Switching signals of the individual gate drivers are generated from a PWM generator 20 of a controller 10.

Next, an energization method of the ANPC inverter will be described. Normally, the DC power supplies Vdc1 and Vdc2 have half a bus voltage, that is, a voltage of VDC/2. Further, the ○ terminal is set to a voltage neutral point of the potential 0. Then, the potential of the P terminal becomes +VDC/2, and the potential of the N terminal becomes -VDC/2. A voltage between the P terminal and the N terminal becomes exactly the bus voltage VDC. In order to energize the AC terminal and the P terminal in this state, it is necessary to simultaneously turn ON at least the first switching element Q1 and the second switching element Q2. Similarly, in order to energize the AC terminal and the N terminal, it is necessary to simultaneously turn ON at least the third switching element Q3 and the fourth switching element Q4.

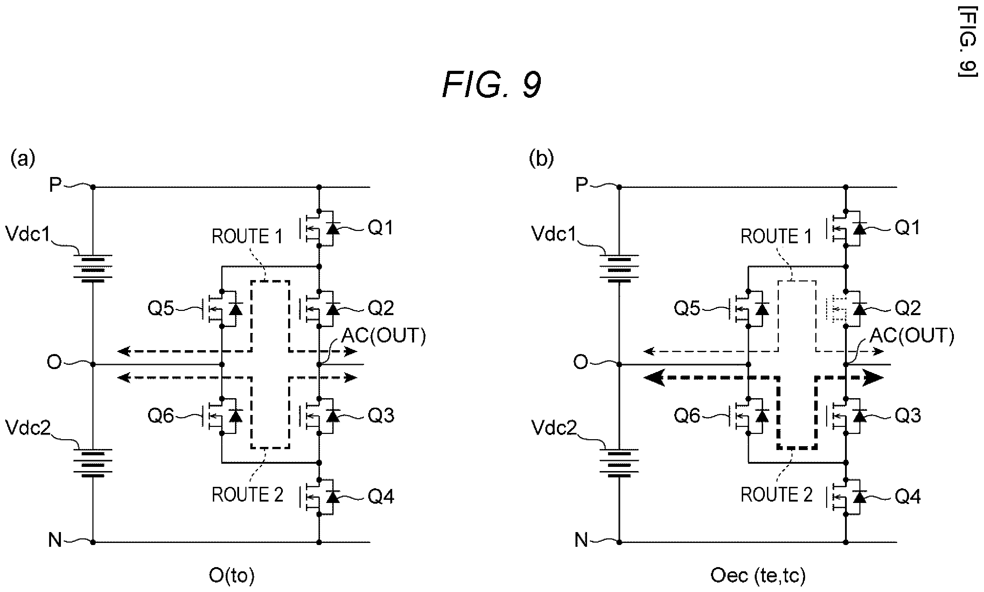

On the other hand, when the AC terminal and the ○ terminal are energized, there are two paths. That is, as illustrated in FIG. 9 to be described later, there are a first path (Route 1) in which the second switching element Q2 and the fifth switching element Q5 are simultaneously turned ON, and a second path (Route 2) in which the third switching element Q3 and the sixth switching element Q6 are simultaneously turned ON. In order to energize the AC terminal and the ○ terminal, at least one of the two paths needs to be in an energized state. When the AC terminal is energized to the P terminal, the ○ terminal, and the N terminal, the potentials of the AC terminal become +VDC/2, 0, and -VDC/2 voltages, respectively. As described above, the voltage output level of the AC terminal is in three stages.

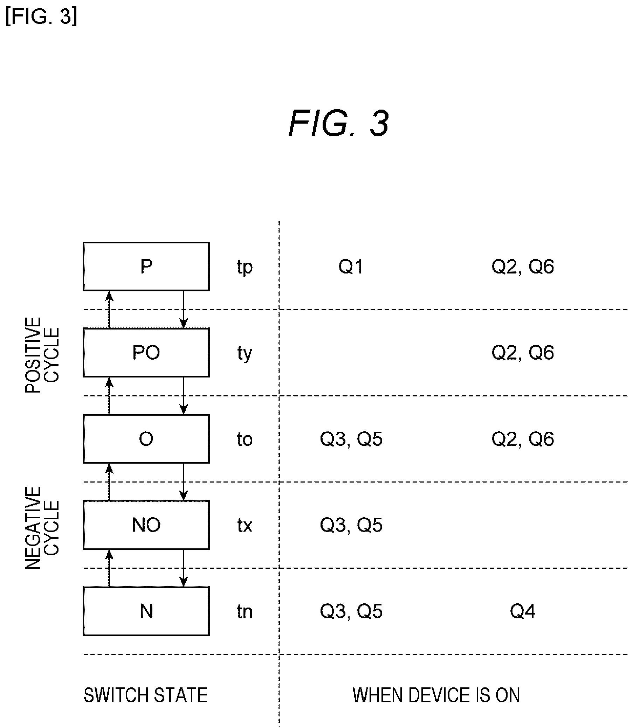

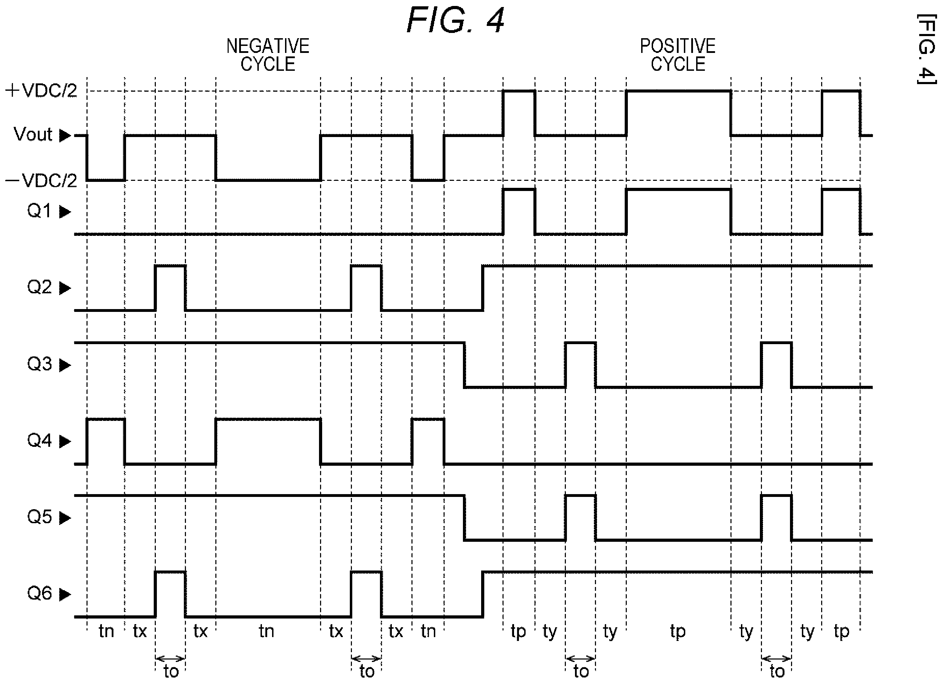

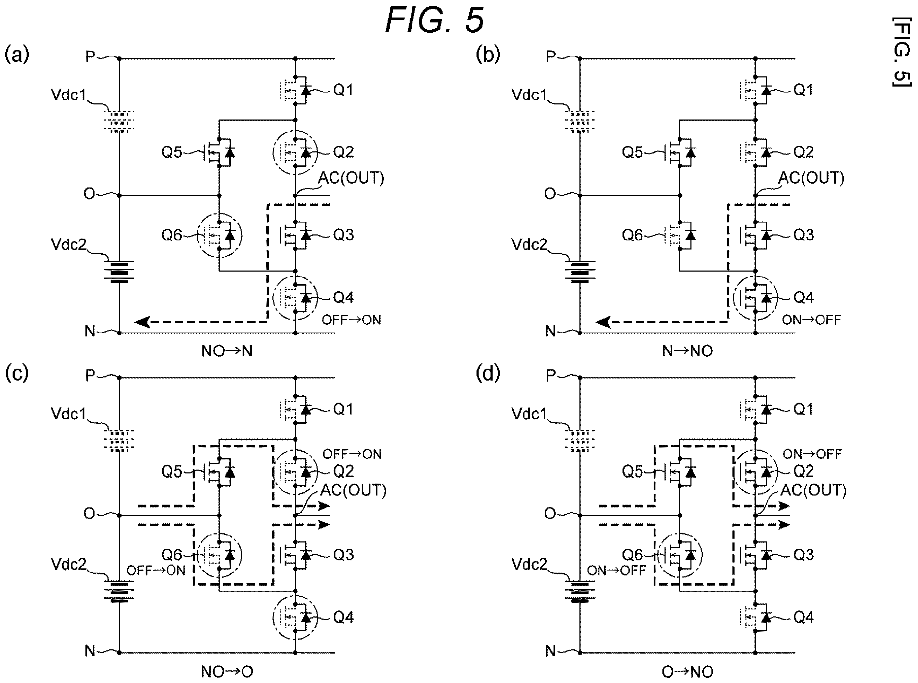

Next, a control method of the ANPC inverter, particularly a control method of a reference example in which the AC terminal and the ○ terminal are energized by the above-described two paths will be described with reference to FIGS. 3 to 5. FIG. 3 is a state transition diagram illustrating the control method of the ANPC inverter in the reference example, and illustrates a state of a switch and a switching element that has turned ON corresponding to the state of the switch. FIG. 4 is a time chart illustrating a control method in the reference example, and illustrates ON/OFF of each switching element and a voltage Vout of the AC terminal. FIG. 5 is a diagram for describing a case where a switching loss and a switching surge occur in a negative cycle.

First, as illustrated in FIG. 3, states when the AC terminal is energized to the P terminal, the ○ terminal, and the N terminal are referred to as a state P, a state ○, and a state N, respectively. The state P, the state O, and the state N correspond to tp, to, and tn illustrated in FIG. 4, respectively. The transition between the state P and the state O is referred to as a positive cycle, and the transition between the state O and the state P is referred to as a negative cycle. Since the operation of a positive cycle is similar to that of a negative cycle, the description thereof will be omitted, and only a transition operation of the negative cycle will be described.

As illustrated in FIGS. 3 and 4, in a state N (tn), the switching elements Q3, Q4, and Q5 are turned ON, and the voltage of the AC terminal is -VDC/2. In the state O (to), the switching elements Q2, Q3, Q5, and Q6 are turned ON, and the output voltage of the AC terminal is 0. Here, in the state O, Route 1 (Q2 and Q5) and Route 2 (Q3 and Q6) are simultaneously energized between the O terminal and the AC terminal, and equal current flows on both paths. Then, when the state transitions from the state N to the state O, the state temporarily passes through an intermediate state called a state NO (tx) (a state PO (ty) in the case of the positive cycle). At the time of the state NO (tx), the switching elements Q3 and Q5 are turned ON.

Here, when the switching element is switched, in a case where the direction of a current at the time of conduction is opposite to the forward direction of a diode included in the switching element, a switching loss and a surge voltage are generated in the switching element. FIG. 5 is a diagram illustrating a case where a loss and a surge voltage are generated. FIG. 5 illustrates a case where a transition occurs between the state N or the state o, and the intermediate state NO, and a switching element in which a loss or a surge occurs is surrounded by an "○" mark.

First, as illustrated in FIG. 5(a), when shifting from the state NO to the state N, the switching element Q4 is turned on. When a current (state N) after the turn-on flows from the AC terminal to the N terminal, a turn-on switching loss occurs in the switching element Q4, and a recovery loss and a recovery surge occur in the switching elements Q2 and Q6.

On the other hand, as illustrated in FIG. 5(b), when the state is shifted from the state N to the state NO, the switching element Q4 is turned off. When a conduction current in the state N has flowed from the AC terminal to the N terminal, a turn-off switching loss and a surge voltage are generated in the switching element Q4.

Next, as illustrated in FIG. 5(c), when the state is shifted from the state NO to the state O, the switching elements Q2 and Q6 are simultaneously turned on. When the conduction current (state O) flows from the O terminal to the AC terminal, a turn-on switching loss occurs in the switching elements Q2 and Q6, and a recovery loss and a recovery surge occur in the switching element Q4.

Then, as illustrated in FIG. 5(d), when the state is shifted from the state O to the state NO, the switching elements Q2 and Q6 are simultaneously turned off. When a current has flowed from the O terminal to the AC terminal in the state O, a turn-off loss and a surge voltage are generated in the switching elements Q2 and Q6.

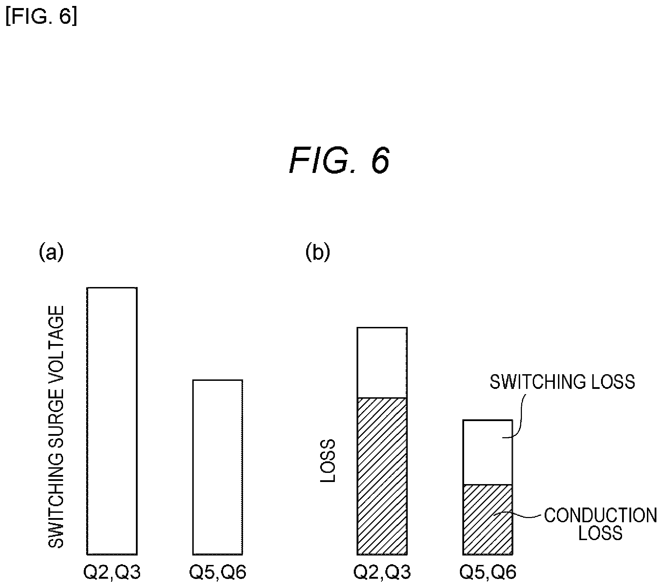

FIG. 6 is a diagram comparing surge voltages and losses generated in the switching elements Q2, Q3, Q5, and Q6 in the reference example. First, a difference between surge voltages generated in these switching elements will be described. Here, the surge voltage is an overvoltage caused by excessive charging of the parasitic capacitance of the switching element due to the influence of an inductance component in the vicinity of the element when the switching element is turned off.

Normally, the larger the inductance component of the circuit, the higher the surge voltage generated in the switching element, but since the inductance components on the paths where the switching elements Q2 and Q6 are located (the path starting from the O terminal and returning to the N terminal) are different, a difference occurs in the surge voltages generated in both the switching elements. Specifically, the path in which the switching element Q6 is located is O terminal → Q6 → Q4 → N terminal. On the other hand, it can be seen that the path in which the switching element Q2 is located is O terminal → Q5 → Q2 → Q3 → Q4 → N terminal, and is longer than the path in which Q6 is located. Therefore, the surge voltage generated in the switching element Q2 is larger than the surge voltage generated in the switching element Q6. The same applies to the positive cycle, and the surge voltage generated in the switching element Q3 is larger than the surge voltage generated in the switching element Q5. In summary, as illustrated in FIG. 6(a), switching surge voltages generated in the switching elements Q2 and Q3 are larger than switching surge voltages generated in the switching elements Q5 and Q6.

Next, a difference in loss generated in the switching elements will be described. Here, the loss generated in the switching element includes a conduction loss caused by heat generated while a current is flowing and a switching loss caused by heat generated at the time of switching. The magnitude of these losses is proportional to the magnitude of the current flowing through the element.

A conduction current flows through the switching element Q4 in the state N, and a conduction current flows through the switching element Q6 in the state O. In contrast, a conduction current flows through the switching element Q3 in both the state O and the state N. Therefore, it can be seen that the conduction loss of the switching element Q3 is higher than the conduction loss of the switching elements Q4 and Q6. In addition, since the conduction current uniformly flows through the switching elements Q3 and Q6 in the state O, the currents at the time of switching of the switching elements Q3 and Q6 are also uniform. Therefore, the switching losses generated in the switching elements Q3 and Q6 are substantially the same. Thus, considering the total loss (conduction loss and switching loss), it can be seen that the loss generated in the switching element Q3 is larger than the loss generated in the switching element Q6. The same applies to the positive cycle, and considering the total loss, the loss generated in the switching element Q2 is larger than the loss generated in the switching element Q5. In summary, as illustrated in FIG. 6(b), the loss generated in the switching elements Q2 and Q3 is larger than the loss generated in the switching elements Q5 and Q6.

As described above, as illustrated in FIG. 6, the switching elements Q2 and Q3 are larger than the switching elements Q5 and Q6 in both the loss and the surge voltage. As described above, in the ANPC inverter, problems such as loss and surge voltage imbalance occur between the switching elements.

### <First Embodiment>

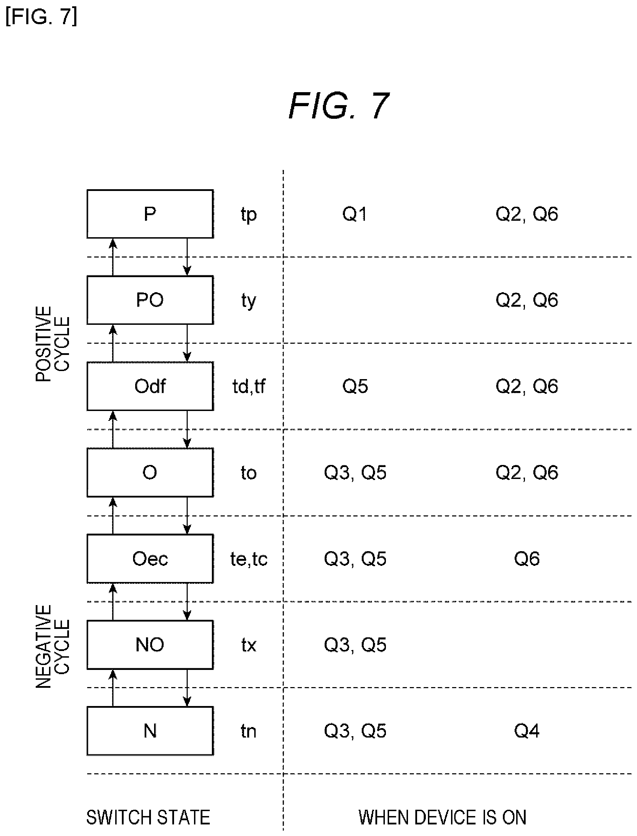

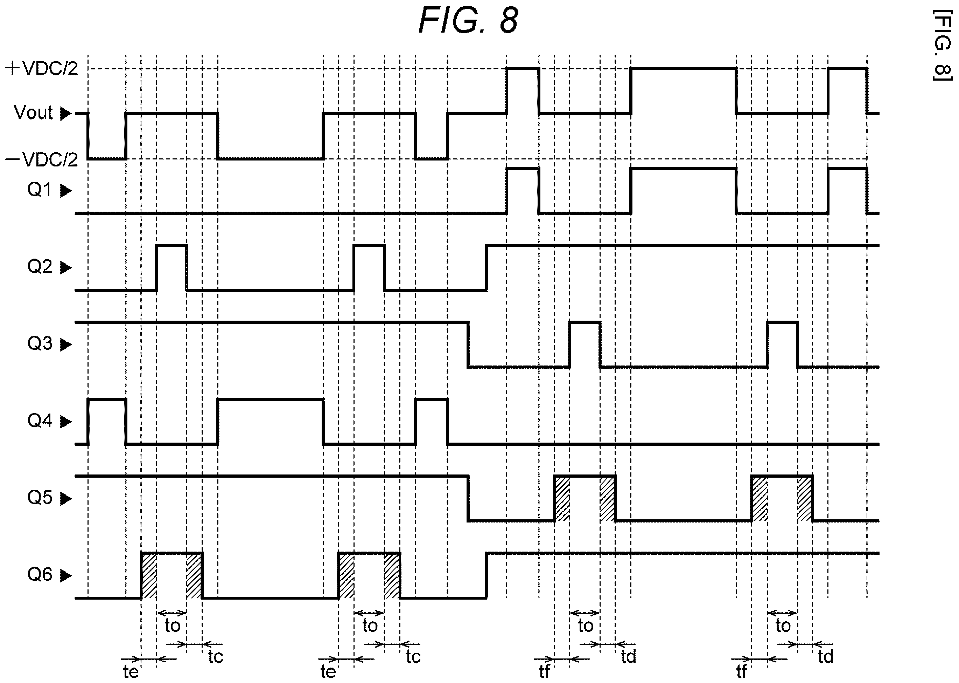

Hereinafter, embodiments of the present invention will be described with reference to the drawings. FIG. 7 is a state transition diagram illustrating a control method of an ANPC inverter in a first embodiment of the present invention. FIG. 8 is a time chart illustrating the control method of the ANPC inverter in the first embodiment of the present invention. Hereinafter, differences from the reference example will be described.

The state transition diagram of the present embodiment is different from the state transition diagram of the reference example in that a state Odf is added between the state PO and the state O and a state Oec is added between the state NO and the state O. The state Odf corresponds to td and tf illustrated in FIG. 7, and the state Oec corresponds to te and tc illustrated in FIG. 7. The time chart of the present embodiment illustrated in FIG. 8 is different from the time chart of the reference example illustrated in FIG. 4 in that te and tc (tf and td in the positive cycle) are added before and after the time to. During these times, for example, the times te and tc in the negative cycle are times when only the switching elements Q3 and Q5 are turned ON, and no current flows anywhere. This time is defined as a dead time in the present specification. The same applies to tf and td in the positive cycle.

Also in the present embodiment, since the operation of a positive cycle is similar to that of a negative cycle, the description thereof will be omitted, and only a transition operation of the negative cycle will be described. As illustrated in FIG. 9, there are two current conduction routes in the state O and the state Oec. In the state Oec, the switching element Q2 is turned off and the switching elements Q3, Q5, and Q6 are turned on from the state O, and the current mainly flows in Route 2. Then, considering the transition from the state NO (the state in which only Q3 and Q5 are ON) to the state O (the state in which Q2, Q3, Q5, and Q6 are ON) via the state Oec (the state in which Q6 is also ON in addition to Q3 and Q5), the current first mainly flows on Route 2 at the moment of the transition to the state Oec. After a while, the switching element Q2 is turned on and shifts to the state O, the current is shared, and the current uniformly flows on both Route 1 and Route 2.

On the contrary, when the state O transitions to the state NO via the state Oec, the current first flows evenly on both routes of the state O, then the current of Route 1 is reduced in the state Oec and the current on Route 2 is increased. Finally, the current flowing on Route 1 may entirely flow to Route 2. In this state, the switching element Q6 is turned off to shift to the state NO. That is, in the reference example, during the transition from the state O to the state NO, the switching elements Q2 and Q6 are simultaneously turned OFF in a state where the current evenly flows, and the equivalent switching loss has occurred. However, in the present embodiment, during the transition from the state O to the state NO, Q2 is first turned OFF in a state where the current evenly flows through the switching elements Q2 and Q6, and then Q6 is turned OFF in a state where the current is aggregated on Route 2.

To sum up, when transitioning to each other between the state O and the state Oec, the fifth switching element performs at least one of an operation of completing the turn-on before the third switching element completes the turn-on or an operation of completing the turn-off after the third switching element completes the turn-off. Also in the positive cycle, when transitioning to each other between the state O and the state Odf, the sixth switching element performs at least one of an operation of completing the turn-on before the second switching element completes the turn-on or an operation of completing the turn-off after the second switching element completes the turn-off.

As described above, the currents at the time of switching flowing through the switching elements Q2 and Q6 are equal in the reference example, but in the case of the present embodiment, the switching element Q6 performs switching with a current larger than that of the switching element Q2. Thus, in the present embodiment, the switching loss generated in Q6 is larger than the switching loss generated in Q2. The same applies to the positive cycle, and the switching loss generated in Q5 is larger than the switching loss generated in Q3. Note that, regarding the switching losses of Q2 and Q3, at the moment of turn-off, unlike the reference example, Q5 and Q6 are still in an ON state, and the current flows toward Q5 and Q6 without being completely cut off. Therefore, the switching loss generated in Q2 and Q3 is smaller than that in the case of the reference example.

In addition, the times te and tc of the state Oec are preferably shorter than the time to of the state O. This is because such setting makes it possible to ignore an increase in the conduction loss of the switching element Q6 in the state Oec.

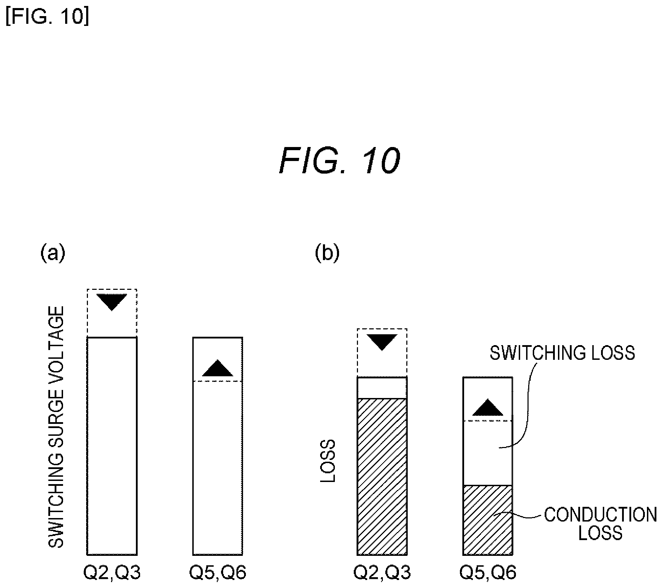

FIG. 10 is a diagram comparing surge voltages and losses generated in the switching elements Q2, Q3, Q5, and Q6 in the present embodiment. Solid lines and broken lines are the results of the present example and the reference example, respectively. Since the switching element Q2 is switched with a smaller current than that in the reference example, the surge voltage in the switching element Q2 is reduced. On the other hand, since the switching element Q6 is switched with a larger current than that in the reference example, the surge voltage in the switching element Q6 increased. The same applies to the positive cycle. The surge voltage generated in the switching element Q3 is reduced, and the surge voltage generated in the switching element Q5 increases. Therefore, the imbalance of the switching surge voltage between the switching element Q2 (Q3) and the switching element Q5 (Q6) is corrected, and the switching surge voltages become almost the same.

Furthermore, since the switching element Q2 is switched with a smaller current than that in the reference example, the switching loss in the switching element Q2 is reduced. On the other hand, since the switching element Q6 is switched with a larger current than that in the reference example, the switching loss in the switching element Q6 increased. Since the conduction loss can be ignored as described above, the conduction loss is similar to that in the reference example. Therefore, considering the total loss (conduction loss and switching loss), the loss imbalance between the switching element Q2 (Q3) and the switching element Q5 (Q6) is corrected and becomes almost the same.

As described above, according to the present embodiment, the imbalance between the loss and the surge voltage in the switching element of the ANPC inverter is reduced.

In order to obtain the effect in the present embodiment described above, it is essential to pass through the state Oec (Q3, Q5, and Q6 are ON) at the time of transition between the state NO (Q3 and Q5 are ON) and the state O (Q2, Q3, Q5, and Q6 are ON). That is, it is essential to perform either an operation in which Q6 is turned on earlier than Q2 during the transition from the state NO to the state O, or an operation in which Q6 is turned OFF later than Q2 during the transition from the state O to the state NO.

Here, "ON" and "OFF" in the present specification refer to "completion of a turn-on operation" and "completion of a turn-off operation", respectively, and more specifically, refer to "maximization of the main current flowing through the element" and "minimization of the main current flowing through the element", respectively. In addition, the start of the turn-on (turn-off) refers to the start of the rise (drop) of a voltage applied to the element. In addition, the completion of the turn-on (turn-off) means that each net drain current becomes 100% (0%).

Note that although both te and tc (td and tf) are set before and after the state O in the first embodiment described above, only either te or tc (td or tf) may be set depending on the situation. For example, when the turn-off loss is significant and the imbalance is large, only tc (td) may be set. Further, the lengths te, tc, td, and tf are preferably set to be longer than the switching delay time of the switching element (the time from the rise or drop of the gate voltage to the rise or drop of the element main current).

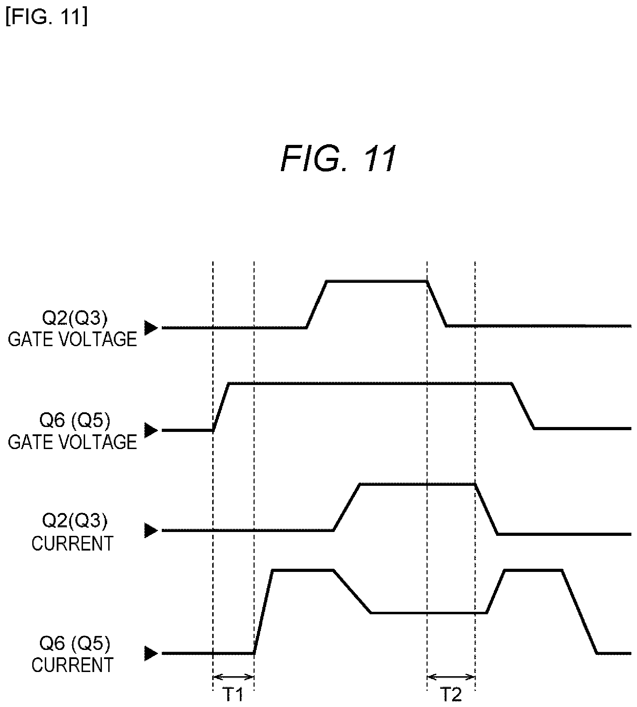

The above reason will be described with reference to FIG. 11. It takes a time T1 from the start of turn-on of the switching element Q6 (Q5) (start of rise in gate voltage) to the actual start of current flow in Q6 (Q5). This is because if the turn-on of the switching element Q2 (Q3) is started during the time T1, the current also starts to flow in Q2 (Q3) before the current flowing in Q6 (Q5) completely rises, and a sufficient imbalance correction effect cannot be obtained.

Similarly at the time of turn-off, it takes a time T2 from the start of turn-off of the switching element Q2 (Q3) to the start of decrease of the current actually flowing in Q2 (Q3). If the turn-off of the switching element Q6 (Q5) is started during the time T2, the current flowing through Q6 (Q5) also starts to drop before the current flowing through Q2 (Q3) is minimized, and a sufficient imbalance correction effect cannot be obtained.

The settings of te, tc, td, and tf may be performed by the PWM generator 20 on the controller 10 side illustrated in FIG. 2, may be set by adding a time adjustment circuit between the PWM generator 20 and the gate driver, or may be set by adding a time adjustment circuit inside the gate driver.

### <Second Embodiment>

Next, a power converter according to a second embodiment will be described. Hereinafter, differences from the first embodiment will be mainly described. In the first embodiment, dead times te, tc, td, and tf are set, and the switching timing is shifted between the switching element Q6 (Q5) and the switching element Q2 (Q3) to correct the imbalance in the surge voltage and the loss. On the other hand, in the present embodiment, the switching timing is shifted by setting different switching speeds for the switching element Q6 (Q5) and the switching element Q2 (Q3).

Specifically, the turn-on speed of the switching element Q5 (Q6) is set to be faster than that of the switching element Q2 (Q3). For example, the turn-on drive resistance of the switching element Q5 (Q6) is set to be smaller than the turn-on drive resistance of the switching element Q2 (Q3).

In addition to the drive resistance, the current during driving may be set. For example, the turn-on gate current of the switching element Q5 (Q6) is set higher than the turn-on gate current of the switching element Q2 (Q3). Then, even if the gate voltages of the switching element Q5 (Q6) and the switching element Q2 (Q3) start to rise at the same timing, the gate voltage of the switching element Q5 (Q6) first exceeds the threshold voltage, and the main current starts to flow through the switching element Q5 (Q6) earlier than through the switching element Q2 (Q3).

On the other hand, the turn-off speed of the switching element Q5 (Q6) can be set slower than that of the switching element Q2 (Q3). For example, the turn-off drive resistance of the switching element Q5 (Q6) is set to be higher than the turn-off drive resistance of the switching element Q2 (Q3). In addition to the drive resistance, a current during driving may be set. For example, the turn-off gate current of the switching element Q5 (Q6) is set to be lower than the turn-on gate resistance of the switching element Q2 (Q3). Then, even if the gate voltages of the switching element Q5 (Q6) and the switching element Q2 (Q3) start to drop at the same timing, the gate voltage drop of the switching element Q5 (Q6) is delayed, so that the timing at which the main current of Q5 (Q6) starts to drop is also delayed from Q2 (Q3).

When the turn-on (turn-off) drive resistance or the turn-on (turn-off) gate current of each switching element is set as described above, even if the turn-on of each switching element is simultaneously started, the current starts to flow through the switching element Q5 (Q6) earlier than through the switching element Q2 (Q3), so that the current at the time of the turn-on becomes large and the turn-on loss becomes larger. Similarly, even if the switching elements are simultaneously turned off, the main current of the switching element Q5 (Q6) starts to drop later than the main current of the switching element Q2 (Q3) at the time of turn-off, so that the current at the time of turn-off is large, and the turn-off loss and the surge voltage become larger. Therefore, as in the first embodiment, the imbalance in the loss and the surge voltage between the switching elements is corrected.

### <Third Embodiment>

Next, a power converter according to a third embodiment will be described. Hereinafter, in the third embodiment, portions different from the above-described embodiments will be mainly described. In the present embodiment, a shift in switching timing is realized by selecting elements having different threshold voltages for the switching element Q6 (Q5) and the switching element Q2 (Q3).

Specifically, an element having a threshold voltage lower than that of the switching element Q2 (Q3) is selected as the switching element Q5 (Q6). Then, even if the gate voltages of the switching element Q5 (Q6) and the switching element Q2 (Q3) start to rise at the same timing, the gate voltage of the switching element Q5 (Q6) first exceeds the threshold voltage, and the main current starts to flow through the switching element Q5 (Q6) earlier than through the switching element Q2 (Q3). On the other hand, even if the gate voltages of the switching element Q5 (Q6) and the switching element Q2 (Q3) start to drop at the same timing, the threshold voltage of the switching element Q5 (Q6) is low, so that a main current drop end timing is delayed.

As described above, when the switching element is selected in this manner, since the current starts to flow through the switching element Q5 (Q6) earlier than through the switching element Q2 (Q3) at the time of turn-on, the current at the time of turn-on increases, and the turn-on loss also increases. In addition, since the switching element Q5 (Q6) has a longer drop time of the main current than the switching element Q2 (Q3) at the time of turn-off, the current at the time of turn-off becomes larger, and the turn-off loss and the surge voltage also become larger. Therefore, as in the above-described embodiments, the imbalance in the loss and the surge voltage between the switching elements is corrected.

### <Fourth Embodiment>

Next, a power converter according to a fourth embodiment will be described. In the fourth embodiment, portions different from those of the above-described embodiments will be mainly described. In the present embodiment, the shift in the switching timing is realized by setting different gate voltages (negative biases) at the time of OFF for the switching element Q6 (Q5) and the switching element Q2 (Q3).

Specifically, the OFF-time gate voltage of the switching element Q5 (Q6) is adjusted to be higher than the OFF-time gate voltage of the switching element Q2 (Q3). For example, the OFF-time gate voltage of the switching element Q5 (Q6) is adjusted to -1 V, and the OFF-time gate voltage of the switching element Q2 (Q3) is adjusted to -3 V. Then, even if the gate voltages of the switching element Q5 (Q6) and the switching element Q2 (Q3) start to rise at the same timing and the same speed, the gate voltage of the switching element Q5 (Q6) first exceeds the threshold voltage, and the main current starts to flow through the switching element Q5 (Q6) earlier than through the switching element Q2 (Q3). On the other hand, at the turn-off time, the lower the OFF-time gate voltage, the faster the drop of the gate voltage, that is, the faster the turn-off speed. Therefore, even if the gate voltages of the switching element Q5 (Q6) and the switching element Q2 (Q3) start to drop at the same timing, the gate voltage drop speed of the switching element Q5 (Q6) is delayed, so that the timing at which the current starts to drop is also delayed.

As described above, since the current starts to flow through the switching element Q5 (Q6) earlier than through the switching element Q2 (Q3) at the time of turn-on, the current at the time of turn-on becomes large, and the turn-on loss becomes larger. In addition, since the main current of the switching element Q5 (Q6) starts to drop later than the switching element Q2 (Q3) at the time of turn-off, the current at the time of turn-off increases, and the turn-off loss and the surge voltage also increase. Therefore, as in the above-described embodiments, the imbalance in the loss and the surge voltage between the switching elements is corrected.

The following operational effects can be obtained by the embodiments of the present invention described above.
(1) The power converter according to the present invention is a power converter including: first and second capacitors connected in series between a positive electrode and a negative electrode of a DC power supply; first to fourth switching elements that are further connected in series between the positive electrode and the negative electrode of the DC power supply in this order and are in parallel with the first and second capacitors; a fifth switching element connected between a connection point of the first and second switching elements and a connection point of the first and second capacitors; a sixth switching element connected between a connection point of the third and fourth switching elements and a connection point of the first and second capacitors; and a load connected to a connection point of the second and third switching elements, in which a state where the first, second, and sixth switching elements are ON, and the third, fourth, and fifth switching elements are off is set to be a first output state, a state where the third, fourth, and fifth switching elements are ON, and the first, second, and sixth switching elements are off is set to be a second output state, a state where the second, third, fifth, and sixth switching elements are ON, and the first and fourth switching elements are off is set to be a third output state, a state where the third and fifth switching elements are ON, and the first, second, fourth, and sixth switching elements are off is set to be a first dead time state, a state where the second and sixth switching elements are ON, and the first, third, fourth, and fifth switching elements are off is set as a second dead time state, switching between the third output state and the first output state passes through the second dead time state, switching between the third output state and the second output state passes through the first dead time state, and when transitioning between the third output state and the second dead time, the fifth switching element performs at least one of an operation of completing turn-on before the third switching element completes the turn-on or an operation of completing turn-off after the third switching element completes the turn-off, or when transitioning between the third output state and the first dead time, the sixth switching element performs at least one of an operation of completing the turn-on before the second switching element completes the turn-on or an operation of completing the turn-off after the second switching element completes the turn-off.
   With the above configuration, it is possible to correct the imbalance in the surge voltage and the loss between the switching elements, and it is possible to enhance the power efficiency.
(2) When transitioning from the third output state to the second dead time, the fifth switching element starts the turn-off with a delay equal to or longer than a time from the start of drop of the gate voltage of the third switching element to the start of drop of the main current, or when transitioning from the third output state to the first dead time, the sixth switching element starts the turn-off with a delay equal to or longer than a time from the start of drop of the gate voltage of the second switching element to the start of drop of the main current. As a result, the main current of the fifth (sixth) switching element also drops after the main current of the third (second) switching element reliably starts to drop, so that the fifth (sixth) switching element can be prevented from completing the turn-off earlier, and the imbalance can be reliably corrected.
(3) When transitioning from the second dead time to the third output state, the fifth switching element starts the turn-on earlier than the turn-on start of the third switching element for at least a time from when a gate voltage of the fifth switching element starts to rise until the main current starts to rise, or when transitioning from the first dead time to the third output state, the sixth switching element starts the turn-on earlier than the turn-on start of the second switching element for at least a time from when a gate voltage of the sixth switching element starts to rise until the main current starts to rise. As a result, similarly to (2), the third (second) switching element can be prevented from completing the turn-on earlier, and the imbalance can be reliably corrected.
(4) A turn-on drive resistance of the fifth switching element is set to be lower than a turn-on drive resistance of the third switching element such that a turn-on speed of the fifth switching element is faster than a turn-on speed of the third switching element, or a turn-on drive resistance of the sixth switching element is set to be lower than a turn-on drive resistance of the second switching element such that a turn-on speed of the sixth switching element is faster than a turn-on speed of the second switching element. As a result, even if the fifth (sixth) switching element and the third (second) switching element are simultaneously started to turn on, the fifth (sixth) switching element is turned on earlier, so that the effect of the present invention can be reliably obtained.
(5) A turn-on gate current of the fifth switching element is set to be higher than a turn-on gate current of the third switching element such that a turn-on speed of the fifth switching element is faster than a turn-on speed of the third switching element, or a turn-on gate current of the sixth switching element is set to be higher than a turn-on gate current of the second switching element such that a turn-on speed of the sixth switching element is faster than a turn-on speed of the second switching element. As a result, as in (4), even if the fifth (sixth) switching element and the third (second) switching element are simultaneously started to turn on, the fifth (sixth) switching element is turned on earlier, so that the effect of the present invention can be reliably obtained.
(6) A turn-off drive resistance of the fifth switching element is set to be higher than a turn-on drive resistance of the third switching element such that a turn-off speed of the fifth switching element is slower than a turn-off speed of the third switching element, or a turn-off drive resistance of the sixth switching element is set to be higher than a turn-off drive resistance of the second switching element such that a turn-off speed of the sixth switching element is slower than a turn-off speed of the second switching element. As a result, even if the fifth (sixth) switching element and the third (second) switching element are simultaneously started to turn off, the fifth (sixth) switching element is turned off later, so that the effect of the present invention can be reliably obtained.
(7) A turn-off gate current of the fifth switching element is set to be lower than a turn-on gate current of the third switching element such that a turn-off speed of the fifth switching element is slower than a turn-on speed of the third switching element, or a turn-off gate current of the sixth switching element is set to be lower than a turn-off gate current of the second switching element such that a turn-off speed of the sixth switching element is slower than a turn-off speed of the second switching element. As a result, as in (6), even if the fifth (sixth) switching element and the third (second) switching element are simultaneously started to turn off, the fifth (sixth) switching element is turned off later, so that the effect of the present invention can be reliably obtained.
(8) The fifth switching element and the third switching element are selected such that the threshold voltage of the fifth switching element is lower than the threshold voltage of the third switching element, or the sixth switching element and the second switching element are selected such that the threshold voltage of the sixth switching element is lower than the threshold voltage of the second switching element. As a result, similarly to the above description, the fifth (sixth) switching element is turned on (turned off later) earlier than the third (second) switching element, so that the effect of the present invention can be reliably obtained.
(9) OFF-time gate voltages of the fifth switching element and the third switching element are adjusted such that the OFF-time gate voltage of the fifth switching element is higher than the OFF-time gate voltage of the third switching element, or OFF-time gate voltages of the sixth switching element and the second switching element are adjusted such that the OFF-time gate voltage of the sixth switching element is higher than the OFF-time gate voltage of the second switching element. As a result, the same effect as (8) can be obtained.

Although some embodiments of the present invention have been described above, the present invention is not limited to the above-described embodiments, and can be realized by various configurations without departing from the gist thereof. For example, a configuration in which the setting methods of the first to fourth embodiments are freely combined can be easily considered. These modifications are included in the invention described in the claims and the equivalent scope thereof.

### Reference Signs List

Vdc1 to Vdc2 DC power supply
C1 to C2 smoothing capacitor (first and second capacitors) L load
Q1 to Q6 semiconductor switching element (first to sixth switching elements)

## Claims

1. A power converter comprising: first and second capacitors connected in series between a positive electrode and a negative electrode of a DC power supply; first to fourth switching elements further connected in series between the positive electrode and the negative electrode of the DC power supply; a fifth switching element connected between a connection point of the first and second switching elements and a connection point of the first and second capacitors; and a sixth switching element connected between a connection point of the third and fourth switching elements and a connection point of the first and second capacitors, a connection point of the second and third switching elements being connected with a load,
wherein
a state in which the first, second, and sixth switching elements are ON, and the third, fourth, and fifth switching elements are OFF is set to a first output state, a state in which the third, fourth, and fifth switching elements are ON, and the first, second, and sixth switching elements are OFF is set to a second output state, and a state in which the second, third, fifth, and sixth switching elements are ON, and the first and fourth switching elements are OFF is set to a third output state,
a state in which the third and fifth switching elements are ON and the first, second, fourth, and sixth switching elements are OFF is set to a first dead time state, and a state in which the second and sixth switching elements are ON and the first, third, fourth, and fifth switching elements are OFF is set to a second dead time state,
switching between the third output state and the first output state passes through the second dead time state, and switching between the third output state and the second output state passes through the first dead time state, and
when transitioning between the third output state and the second dead time state, the fifth switching element performs at least one of an operation of completing turn-on before the third switching element completes the turn-on or an operation of completing turn-off after the third switching element completes the turn-off, or when transitioning between the third output state and the first dead time state, the sixth switching element performs at least one of an operation of completing the turn-on before the second switching element completes the turn-on or an operation of completing the turn-off after the second switching element completes the turn-off.

2. The power converter according to claim 1, wherein
when transitioning from the third output state to the second dead time state, the fifth switching element starts the turn-off with a delay equal to or longer than a time from when a gate voltage of the third switching element starts to drop until a main current starts to drop, or
when transitioning from the third output state to the first dead time state, the sixth switching element starts the turn-off with a delay equal to or longer than a time from when a gate voltage of the second switching element starts to drop until the main current starts to drop.

3. The power converter according to claim 1, wherein
when transitioning from the second dead time state to the third output state, the fifth switching element starts the turn-on earlier than the turn-on start of the third switching element for at least a time from when a gate voltage of the fifth switching element starts to rise until the main current starts to rise, or
when transitioning from the first dead time state to the third output state, the sixth switching element starts the turn-on earlier than the turn-on start of the second switching element for at least a time from when a gate voltage of the sixth switching element starts to rise until the main current starts to rise.

4. The power converter according to claim 1, wherein
a turn-on drive resistance of the fifth switching element is set to be lower than a turn-on drive resistance of the third switching element such that a turn-on speed of the fifth switching element is faster than a turn-on speed of the third switching element, or
a turn-on drive resistance of the sixth switching element is set to be lower than a turn-on drive resistance of the second switching element such that a turn-on speed of the sixth switching element is faster than a turn-on speed of the second switching element.

5. The power converter according to claim 1, wherein
a turn-on gate current of the fifth switching element is set to be higher than a turn-on gate current of the third switching element such that a turn-on speed of the fifth switching element is faster than a turn-on speed of the third switching element, or
a turn-on gate current of the sixth switching element is set to be higher than a turn-on gate current of the second switching element such that a turn-on speed of the sixth switching element is faster than a turn-on speed of the second switching element.

6. The power converter according to claim 1, wherein
a turn-off drive resistance of the fifth switching element is set to be higher than a turn-on drive resistance of the third switching element such that a turn-off speed of the fifth switching element is slower than a turn-off speed of the third switching element, or
a turn-off drive resistance of the sixth switching element is set to be higher than a turn-off drive resistance of the second switching element such that a turn-off speed of the sixth switching element is slower than a turn-off speed of the second switching element.

7. The power converter according to claim 1, wherein
a turn-off gate current of the fifth switching element is set to be lower than a turn-on gate current of the third switching element such that a turn-off speed of the fifth switching element is slower than a turn-on speed of the third switching element, or
a turn-off gate current of the sixth switching element is set to be lower than a turn-off gate current of the second switching element such that a turn-off speed of the sixth switching element is slower than a turn-off speed of the second switching element.

8. The power converter according to claim 1, wherein
the fifth switching element and the third switching element are selected such that a threshold voltage of the fifth switching element is lower than a threshold voltage of the third switching element, or
the sixth switching element and the second switching element are selected such that a threshold voltage of the sixth switching element is lower than a threshold voltage of the second switching element.

9. The power converter according to claim 1, wherein
OFF-time gate voltages of the fifth switching element and the third switching element are adjusted such that the OFF-time gate voltage of the fifth switching element is higher than the OFF-time gate voltage of the third switching element, or
OFF-time gate voltages of the sixth switching element and the second switching element are adjusted such that the OFF-time gate voltage of the sixth switching element is higher than the OFF-time gate voltage of the second switching element.
